# EUROPÄISCHE PATENTSCHRIFT

(11) **EP 3 772 620 B1**
(45) Veröffentlichungstag und Bekanntmachung des Hinweises auf die Patenterteilung: **17.09.2025**
(21) Anmeldenummer: 20184234.1
(22) Anmeldetag: 06.07.2020
(51) Int. Cl.: F24C 15/20, F24F 8/10, F24F 8/158, F24F 8/108, F24F 110/50, F24F 110/52

(54) **LUFTBEHANDLUNGSSYSTEM ZUR VERBESSERUNG EINER LUFTQUALITÄT EINER INNENLUFT IN EINEM RAUM UND VERFAHREN ZU DESSEN BETRIEB**
AIR TREATMENT SYSTEM FOR IMPROVING AIR QUALITY OF INDOOR AIR IN A ROOM AND METHOD FOR ITS OPERATION
SYSTÈME DE TRAITEMENT DE L'AIR PERMETTANT D'AMÉLIORER UNE QUALITÉ DE L'AIR D'UN AIR INTÉRIEUR DANS UNE PIÈCE ET SON PROCÉDÉ DE FONCTIONNEMENT

(30) Priorität: 05.08.2019 DE 102019121115
(43) Veröffentlichungstag der Anmeldung: 10.02.2021
(73) Patentinhaber: Miele & Cie. KG, 33332 Gütersloh (DE)
(72) Erfinder: Sellmann, Fabian, 33335 Gütersloh (DE); Zinkann, Peter, 33332 Gütersloh (DE); Baric, Martin, 32051 Herford (DE); Amshoff, Benjamin, 33335 Gütersloh (DE)

(56) Entgegenhaltungen:
- EP-A1- 3 499 133
- WO-A1-2018/061147
- CN-A- 107 036 140
- CN-A- 108 240 692
- JP-A- 2018 105 568
- US-A1- 2018 372 330

## Beschreibung

Die Erfindung betrifft ein Luftbehandlungssystem zur Verbesserung einer Luftqualität einer Innenluft in einem Raum und ein Verfahren zu dessen Betrieb.

Derartige Luftbehandlungssysteme zur Verbesserung einer Luftqualität einer Innenluft in einem Raum sowie Verfahren zu deren Betrieb sind aus dem Stand der Technik in einer Vielzahl von Ausführungsformen bereits vorbekannt. So beschreibt beispielsweise die Druckschrift DE 10 2011 082 928 A1 eine Dunstabzugshaube, welche mit einem Sensor gekoppelt ist, der eine Außentemperatur erfasst. Dabei ist vorgesehen, dass eine Steuerung der Dunstabzugshaube in Abhängigkeit der erfassten Außentemperatur eine Luftleitvorrichtung einstellt.

Ein Luftbehandlungssysteme zur Verbesserung einer Luftqualität der Innenluft in mehreren Räumen ist aus der Druckschrift WO 2018/061147 A1 bekannt.

Aus den Druckschriften US 2018/372330 A1 und DE 10 2018 201 047 A1 ist bekannt, eine Dunstabzugshaube in Abhängigkeit eines Betriebszustandes eines anderen Haushaltsgerätes im selben Raum zu steuern.

In den Druckschriften CN 107 036 140 A und JP 2018 105 568 A wird beschrieben, dass der Lüfter einer Dunstabzugshaube mit unterschiedlichen Drehzahlen betrieben werden kann.

Die Druckschrift EP 3 499 133 A1 beschreibt einen Wechsel zwischen Umluftbetrieb und Abluftbetrieb bei einer Dunstabzugshaube in Abhängigkeit der Qualität der Außenluft.

Der Erfindung liegt die Aufgabe zugrunde ein Luftbehandlungssystem zur Verbesserung der Luftqualität der Innenluft und ein Verfahren zu dessen Betrieb zu schaffen.

Erfindungsgemäß wird diese Aufgabe durch ein Luftbehandlungssystem mit den Merkmalen des Patentanspruchs 1 sowie durch ein Verfahren zum Betrieb eines Luftbehandlungssystems mit den Merkmalen des Patentanspruchs 7 gelöst. Vorteilhafte Ausgestaltungen und Weiterbildungen der Erfindung ergeben sich aus den nachfolgenden abhängigen Ansprüchen.

Der mit der Erfindung erreichbare Vorteil besteht insbesondere darin, dass das Luftbehandlungssystem und das Verfahren zu dessen Betrieb verbessert sind. Mittels der erfindungsgemäßen Ausbildung des Luftbehandlungssystems und des Verfahrens zu dessen Betrieb ist es beispielsweise möglich, ein einziges Luftbehandlungsgerät sowohl für eine allgemeine Verbesserung der Luftqualität der Innenluft in dem Raum wie auch für eine auf bestimmte Haushaltsgeräte abgestimmte Verbesserung der Luftqualität der Innenluft in dem Raum zu verwenden. Entsprechend reduzieren sich die Kosten und der dafür erforderliche Platzbedarf. Dies ist insbesondere vorteilhaft bei ineinander übergehenden oder miteinander verbundenen Koch-, Ess- und Wohnräumen.

Grundsätzlich ist das Luftbehandlungsgerät nach Art, Funktionsweise, Dimensionierung, Material und Anordnung in weiten geeigneten Grenzen frei wählbar. Eine vorteilhafte Weiterbildung des erfindungsgemäßen Luftbehandlungssystems sieht vor, dass das Luftbehandlungsgerät für einen Umluftbetrieb, einen Abluftbetriebszustand und einen Luftreinigungsbetrieb ausgebildet und eingerichtet ist. Auf diese Weise ist eine je nach den Erfordernissen des Einzelfalls angepasste und optimierte Verbesserung der Luftqualität der Innenluft in dem Raum ermöglicht.

Eine weitere vorteilhafte Weiterbildung des erfindungsgemäßen Luftbehandlungssystems sieht vor, dass das Luftbehandlungsgerät einen Fettfilter und/oder einen Aktivkohlefilter und/oder eine Plasmaeinheit und/oder einen HEPA-Filter aufweist. Hierdurch ist das Luftbehandlungsgerät bei einer Vielzahl von voneinander verschiedenen Szenarien einsetzbar, die für die Innenluft eines Raums denkbar sind.

Gemäß einem Aspekt der Erfindung ist das Luftbehandlungsgerät in der Lage eine Abluftfunktion und/oder eine Umluftfunktion und/oder eine Luftreinigungsfunktion bereitzustellen. Bei der Abluftfunktion wird die geförderte Luft aus dem Gebäude geführt. Die Abluftfunktion kommt bei einem Abluftbetriebszustand zur Anwendung, kann aber auch im Langzeitbetriebszustand eingesetzt werden. Bei der Umluftfunktion wird die geförderte Luft in dem Aufstellraum des Luftbehandlungsgerätes umgewälzt. Vorzugsweise wird die Luft dabei zumindest über einen Fettfilter geleitet. Die Umluftfunktion kommt bei einem Abluftbetriebszustand zur Anwendung, kann aber auch im Langzeitbetriebszustand eingesetzt werden. Bei der Luftreinigungsfunktion wird wird die geförderte Luft in dem Aufstellraum des Luftbehandlungsgerätes umgewälzt, wobei die Luft über zusätzliche Filter wie einen Aktivkohlefilter und/oder eine Plasmaeinheit und/oder einen HEPA-Filter geleitet wird. Die Luftreinigungsfunktion kommt bei einem Reinigungsbetrieb zur Anwendung und wird vorzugsweise im Langzeitbetriebszustand eingesetzt.

Eine besonders vorteilhafte Weiterbildung des erfindungsgemäßen Luftbehandlungssystems sieht vor, dass das Luftbehandlungsgerät als ein Dunstabzug für ein Kochfeld ausgebildet ist. Auf diese Weise ist das Luftbehandlungsgerät und damit das erfindungsgemäße Luftbehandlungssystem als Ganzes optisch gefällig und platzsparend in dem Raum integrierbar.

Ein als Dunstabzug ausgeführtes Luftbehandlungssystem kann sowohl als eine oberhalb eines Kochfeldes angeordnete Dunstabzughaube als auch als eine in einem Kochfeld integrierte und nach unterhalb des Kochfeldes absaugende Dunstabzugseinrichtung ausgeführt sein. Ein solches Luftbehandlungssystem kombiniert die Funktion eines Luftreinigers mit der herkömmlichen Funktion eines Dunstabzuges für ein Kochfeld, wobei ein Dunstabzug die Hauptbestandteile, wie Gebläse, Fettfilter, Aktivkohlefilter schon aufweist. Mit dem Aufkommen von immer mehr Wohnungen mit Grand Room-Design, also Küche, Essen und Wohnen in einem Raum, wird das Problem mit den Essensgerüchen umso wichtiger. Durch das Luftbehandlungssystem kann, insbesondere im Grand Room-Design, vermieden werden, dass man noch lange Zeit nach einer Mahlzeit den Geruch aus dem Küchenbereich wahrnimmt. Dies wird insbesondere erreicht, durch das Luftbehandlungssystem, welches im Dauerbetrieb auch im Wohnbereich wirksam und zugleich extrem leise ist.

Eine andere vorteilhafte Weiterbildung des erfindungsgemäßen Luftbehandlungssystems sieht vor, dass das Luftbehandlungssystem eine mit der Steuerung signalübertragend verbundene Ausgabeeinheit zur Ausgabe von akustischen und/oder optischen Hinweisen an einen Benutzer des Luftbehandlungssystems aufweist. Hierdurch ist die Ausgabe von mit dem Luftbehandlungssystem und/oder der Verbesserung der Luftqualität der Innenluft in Beziehung stehenden Informationen und Handlungsempfehlungen an den Benutzer ermöglicht.

Entsprechend sieht eine vorteilhafte Weiterbildung des erfindungsgemäßen Verfahrens vor, dass mittels der Ausgabeeinheit in Abhängigkeit der Luftqualität der Innenluft, der Luftqualität der Außenluft sowie des Betriebszustands des Haushaltsgeräts ein Lüftungshinweis ausgegeben wird. Ein Lüftungshinweis ist insbesondere ein Hinweis an den Benutzer, ein Fenster manuell zu öffnen. Alternativ kann ein Lüftungshinweis auch ein Hinweis an eine Haussteuerung sein, beispielsweise dass diese ein Fenster oder eine Zuluftklappe öffnet.

Eine weitere vorteilhafte Weiterbildung des erfindungsgemäßen Verfahrens sieht vor, dass die Luftqualität der Innenluft und/oder die Luftqualität der Außenluft mindestens eine Größe aus Feinstaub, flüchtige organische Verbindungen, Temperatur und relative Luftfeuchte umfasst. Auf diese Weise ist die Erfassung der Luftqualität und damit der Betrieb des erfindungsgemäßen Luftbehandlungssystems je nach den Erfordernissen des Einzelfalls für eine Vielzahl von voneinander verschiedenen Szenarien ermöglicht.

Eine vorteilhafte Weiterbildung der vorgenannten Ausführungsform des erfindungsgemäßen Verfahrens sieht vor, dass das Luftbehandlungsgerät in Abhängigkeit einer Temperaturdifferenz zwischen der Temperatur der Außenluft und der Temperatur der Innenluft automatisch in den Abluftbetriebszustand oder entweder in den Umluftbetriebszustand oder in den Luftreinigungsbetrieb umgeschaltet wird. Entsprechend ist es möglich, das Luftbehandlungsgerät beispielsweise bei einem großen Unterschied zwischen der Temperatur der Innenluft auf der einen Seite und der Temperatur der Außenluft auf der anderen Seite nicht in dem Abluftbetriebszustand zu betreiben, sondern stattdessen in dem Umluftbetriebszustand oder in dem Luftreinigungsbetrieb zu betreiben. Hierdurch ist eine Energieeinsparung realisierbar, da beispielsweise bei sehr niedrigen Außentemperaturen im Winter keine warme Innenluft aus dem Raum in die freie Umgebung abgeführt wird. Analoges gilt beispielsweise auch für sehr hohe Außentemperaturen im Sommer, wenn der Raum und damit die Innenluft gekühlt werden.

Als Abluftbetriebszustand und Umluftbetriebszustand werden zwei Regelbetriebsarten bezeichnet, bei denen das Luftbehandlungsgerät mit höherer Leistung arbeitet als in dem Luftreinigungsbetrieb. Die Regelbetriebsarten werden üblicherweise im Zusammenhang mit einem Kochereigniss in unmittelbarer Umgebung des Luftbehandlungsgeräts durchgeführt. Eine weitere Regelbetriebsart ist der Luftreinigungsbetrieb, welcher zeitlich getrennt von einem Kochereigniss stattfinden kann.

Bei den Regelbetriebsarten ist die Drehzahl des Gebläses des Luftbehandlungsgeräts - je nach gewählter Lüfterstufe und Gerätetyp - in einem Bereich zwischen 500 Umdrehungen pro Minute und 3000 Umdrehungen pro Minute. Dabei entsteht üblicherweise ein Schallpegel von größer 35 dB(A), insbesondere - je nach gewählter Lüfterstufe und Gerätetyp - in einem Bereich zwischen 36 dB(A) und 64 dB(A).

Um ausreichend Wrasen bei einem Kochprozess abzuführen wird - je nach gewählter Lüfterstufe und Gerätetyp - im Abluftbetriebszustand eine Luftstrommenge in einem Bereich zwischen 190 Kubikmeter pro Stunde und 700 Kubikmeter pro Stunde und in einem Umluftbetriebszustand eine Luftstrommenge in einem Bereich zwischen 110 Kubikmeter pro Stunde und 500 Kubikmeter pro Stunde eingestellt.

Eine vorteilhafte Weiterbildung der letztgenannten Ausführungsform des erfindungsgemäßen Verfahrens sieht vor, dass die Temperatur der Innenluft als ein Vorgabewert vorher festgelegt und in der Steuerung abgespeichert wird. Auf diese Weise ist die unvermeidbare Varianz bei der tatsächlichen Temperatur der Innenluft für die Zwecke des erfindungsgemäßen Verfahrens wirksam vermieden. Die vorgenannte Varianz, also die Schwankung der tatsächlichen Temperatur der Innenluft, ergibt sich beispielsweise aus dem Betrieb von in dem Raum positionierten Haushaltsgeräten.

Das erfindungsgemäße Verfahren sieht vor, dass das Luftbehandlungsgerät alternativ in wenigstens einem Regelbetriebszustand und einem Langzeitbetriebszustand betrieben werden kann, wobei das Luftbehandlungsgerät und/oder ein Gebläse des Luftbehandlungsgeräts während eines Regelbetriebszustandes mit einer Drehzahl von größer 500 Umdrehungen pro Minute und in dem Langzeitbetriebszustand mit einer Drehzahl von kleiner 350 Umdrehungen pro Minute betrieben wird.

In dem Langzeitbetriebszustand wird das Luftbehandlungsgerät, insbesondere das Gebläse des Luftbehandlungsgeräts, derart betrieben, dass der Schallpegel kleiner 30 dB(A) ist. Dies wird beispielswesie erreicht, in dem die Drehzahl des Gebläses in einem Bereich zwischen 320 Umdrehungen pro Minute und 180 Umdrehungen pro Minute eingestellt wird. Durch den Betrieb Luftbehandlungsgerät in dem Langzeitbetriebszustand mit einem geringen Schallpegel wird erreicht, dass das Luftbehandlungsgerät während des Langzeitbetriebszustand im Wesentlichen als nicht in Betrieb wahrnehmbar ist. Hierdurch ist es beispielsweise möglich, das Luftbehandlungsgerät über einen langen Zeitraum zu betreiben, ohne dass Personen, die sich in dem Raum oder in dem Haus aufhalten, durch den Betrieb des Luftbehandlungsgeräts gestört werden.

Ein Aspekt der Erfindung ist, dass im Langzeitbetriebszustand eine Luftstrommenge von kleiner 150 Kubikmeter pro Stunde, vorzugsweise in einem Bereich von 110 Kubikmeter pro Stunde und 50 Kubikmeter pro Stunde eingestellt wird.

Eine vorteilhafte Weiterbildung der vorgenannten Ausführungsform des erfindungsgemäßen Verfahrens sieht vor, dass der Langzeitbetriebszustand des Luftbehandlungsgeräts in Abhängigkeit einer vorher festgelegten Zeitspanne eines Betriebs des Haushaltsgeräts und/oder einer vorher festgelegten Betriebstemperatur des Haushaltsgeräts und/oder einer vorher festgelegten Betriebsart des Haushaltsgeräts und/oder eines vorher festgelegten Automatikprogramms des Haushaltsgeräts und/oder der Luftqualität der Innenluft automatisch gestartet wird. Auf diese Weise ist der Nutzungskomfort bei gleichzeitiger Verbesserung der Luftqualität der Innenluft in dem Raum gesteigert.

Eine vorteilhafte Weiterbildung der beiden letztgenannten Ausführungsformen des erfindungsgemäßen Verfahrens sieht vor, dass der Langzeitbetriebszustand des Luftbehandlungsgeräts in Abhängigkeit einer vorher festgelegten Zeitspanne und/oder einer manuellen und/oder automatischen Umschaltung des Luftbehandlungsgeräts in einen anderen Betriebszustand des Luftbehandlungsgeräts und/oder der Luftqualität der Innenluft automatisch beendet wird. Hierdurch ist sichergestellt, dass das Luftbehandlungsgerät lediglich bedarfsweise in dem Langzeitbetriebszustand betrieben wird und/oder ein anderer Betriebszustand des Luftbehandlungsgeräts in gewünschter Weise manuell oder automatisch einschaltbar ist.

Ein Ausführungsbeispiel der Erfindung ist in den Zeichnungen rein schematisch dargestellt und wird nachfolgend näher beschrieben. Es zeigt
- Figur 1: ein Ausführungsbeispiel des erfindungsgemäßen Luftbehandlungssystems in perspektivischer Darstellung,
- Figur 2: das Luftbehandlungsgerät des Ausführungsbeispiels in einer grob schematischen Darstellung und
- Figur 3: eine Tabelle zu dem Ausführungsbeispiel, in der mögliche Ansteuerungen des Luftbehandlungsgeräts in Abhängigkeit der Luftqualität der Innenluft, der Luftqualität der Außenluft sowie eines Betriebszustands des Haushaltsgeräts aufgelistet sind.

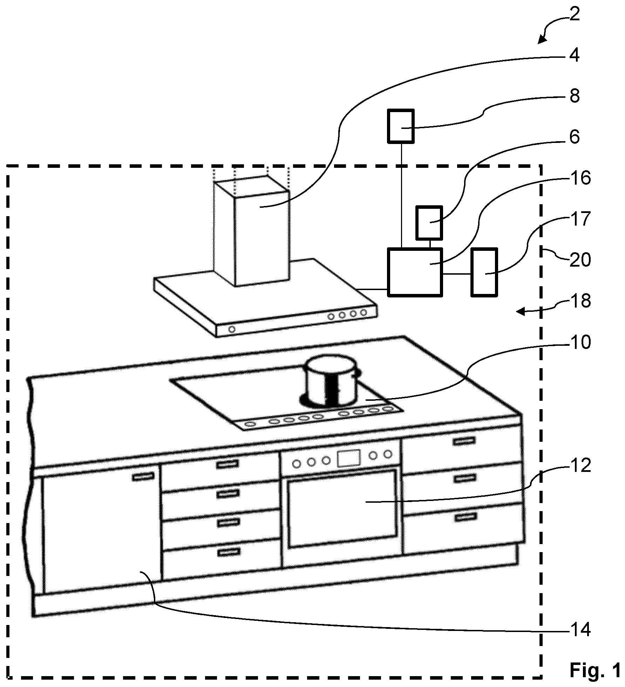

In der Fig. 1 ist ein Ausführungsbeispiel des erfindungsgemäßen Luftbehandlungssystems zur Verbesserung einer Innenluft in einem Raum rein exemplarisch dargestellt. Das Luftbehandlungssystem 2 umfasst ein als Dunstabzug ausgebildetes Luftbehandlungsgerät 4 zur Behandlung der nicht dargestellten Innenluft, eine Innenluftsensoreinheit 6 zur Ermittlung der Luftqualität der Innenluft, eine Außenluftsensoreinheit 8 zur Ermittlung der Luftqualität der nicht dargestellten Außenluft, drei in dem Raum positionierte Haushaltsgeräte 10, 12, 14 und eine Steuerung 16 zur automatischen Ansteuerung des Luftbehandlungsgeräts 4 in Abhängigkeit der Luftqualität der Innenluft, der Luftqualität der Außenluft sowie eines Betriebszustands der Haushaltsgeräte 10, 12, 14, wobei die Steuerung 16 mit der Innenluftsensoreinheit 6, mit der Außenluftsensoreinheit 8 und mit den Haushaltsgeräten 10, 12, 14 signalübertragend verbunden ist. Der Begriff "Außenluftsensoreinheit" ist weit auszulegen und umfasst alle denkbaren Arten, Daten über die Luftqualität der Außenluft zu ermitteln. Beispielsweise ist es denkbar, dass diese Daten mittels einer Internetverbindung von Internetdiensten bezogen werden. Der Raum 18 ist in der Fig. 1 durch eine gestrichelte Linie 20 von der freien Umgebung abgegrenzt. Bei den Haushaltsgeräten 10, 12, 14 handelt es sich um ein Kochfeld 10, einen Backofen mit Dampfgarfunktion und Pyrolysefunktion 12 und einen Geschirrspüler 14. Wie aus der Fig. 1 ersichtlich ist, ist das Luftbehandlungsgerät 4 insbesondere dem Kochfeld 10 zugeordnet, nämlich über dem Kochfeld 10 angeordnet.

Ferner weist das Luftbehandlungssystem 2 bei dem vorliegenden Ausführungsbeispiel eine mit der Steuerung 16 signalübertragend verbundene Ausgabeeinheit 17 zur Ausgabe von akustischen und/oder optischen Hinweisen an einen Benutzer des Luftbehandlungssystems 2 auf.

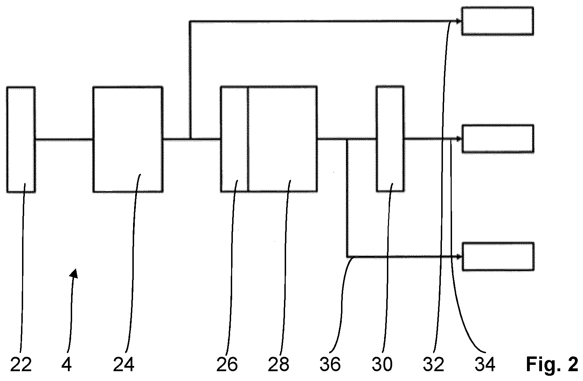

Das Luftbehandlungsgerät 4 ist in der Fig. 2 grob schematisch dargestellt und umfasst einen Fettfilter 22, ein Gebläse 24, eine Plasmaeinheit 26, einen Aktivkohlefilter 28, einen HEPA-Filter 30 und weist einen Strömungskanal 32 für den Abluftbetrieb, einen Strömungskanal 34 für den Luftreinigungsbetrieb und einen Strömungskanal 36 für den Umluftbetriebszustand des Luftbehandlungsgeräts 4 auf. Somit ist das Luftbehandlungsgerät 4 für die Betriebszustände Umluftbetrieb, Abluftbetriebszustand und Luftreinigungsbetrieb ausgebildet und eingerichtet. Wie aus der Fig. 2 ersichtlich ist, wird die Innenluft aus dem Raum 18 in dem Abluftbetriebszustand des Luftbehandlungsgeräts 4 lediglich über den Fettfilter 22 geführt. In dem Umluftbetriebszustand wird die Innenluft aus dem Raum 18 über den Fettfilter 22, die Plasmaeinheit 26 und den Aktivkohlefilter 28 geführt. Falls das Luftbehandlungsgerät 4 in dessen Luftreinigungsbetrieb betrieben wird, wird die Innenluft aus dem Raum 18 über den Fettfilter 22, die Plasmaeinheit 26, den Aktivkohlefilter 28 und den HEPA-Filter 30 geführt.

Im Nachfolgenden wird die Funktionsweise des erfindungsgemäßen Luftbehandlungssystems sowie das erfindungsgemäße Verfahren gemäß dem vorliegenden Ausführungsbeispiel und anhand der Fig. 1 bis 3 näher erläutert.

Das Luftbehandlungsgerät 4 des Luftbehandlungssystems 2 ist zunächst ausgeschaltet. Mittels der Innenluftsensoreinheit 6 und der Steuerung 16 wird in vorher festgelegten zeitlichen Abständen oder kontinuierlich die Luftqualität der Innenluft in dem Raum 18 ermittelt und ausgewertet. Hierfür werden die Größen Feinstaub, flüchtige organische Verbindungen, Temperatur und relative Luftfeuchte auf dem Fachmann bekannte Weise ermittelt und ausgewertet.

Analog dazu werden mittels der Außenluftsensoreinheit 8 und der Steuerung 16 die Größen Feinstaub, flüchtige organische Verbindungen, Temperatur und relative Luftfeuchte der Außenluft auf dem Fachmann bekannte Weise ermittelt und ausgewertet.

Ferner wird auf dem Fachmann bekannte Weise der jeweilige Betriebszustand der Haushaltsgeräte 10, 12, 14 ermittelt und in der Steuerung 16 ausgewertet.

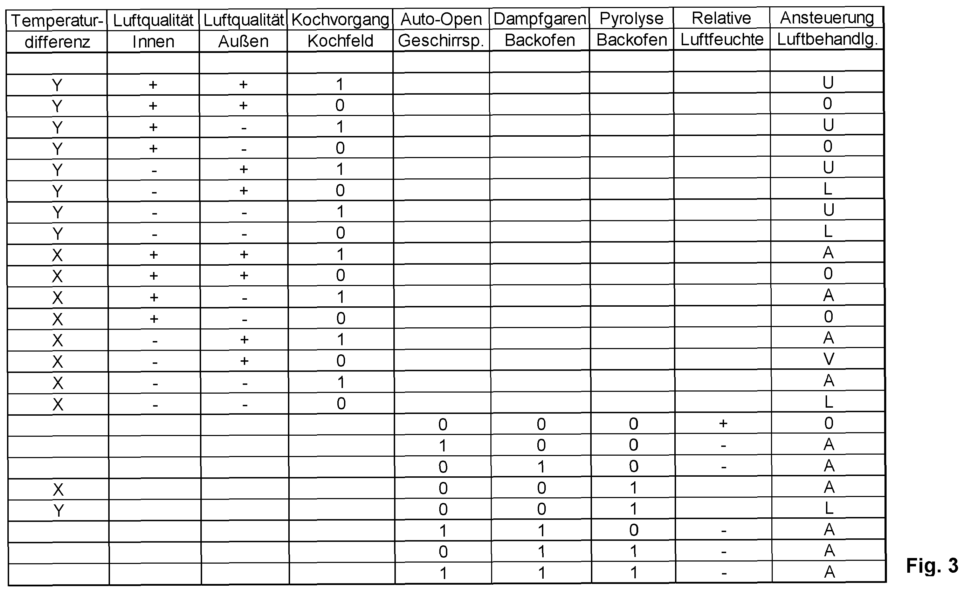

Ein Beispiel für eine denkbare Auswertung ist in der Tabelle der Fig. 3 rein exemplarisch dargestellt. Zwecks Ermittlung der in der Tabelle angegebenen Temperaturdifferenzen zwischen der Innenluft und der Außenluft wird die Temperatur der Innenluft bei dem vorliegenden Ausführungsbeispiel als ein Vorgabewert vorher festgelegt und in der Steuerung 16 abgespeichert. Beispielsweise ist es denkbar, dass der Vorgabewert für die Temperatur der Innenluft von einem nicht dargestellten Benutzer mittels einer nicht dargestellten Benutzerschnittstelle in das Luftbehandlungssystem 2 eingegeben wird. Der Vorgabewert kann beispielsweise in einem Wertebereich von 15°C bis 22°C ausgewählt werden.

Eine Abweichung der Temperatur der Außenluft von beispielsweise maximal 5 K von der Temperatur der Innenluft, also dem vorgenannten Vorgabewert, ist in der Tabelle mit "X" für eine nicht zu große Temperaturdifferenz symbolisiert. Eine Abweichung der Temperatur der Außenluft von beispielsweise mehr als 5 K von der Temperatur der Innenluft, also dem vorgenannten Vorgabewert, ist in der Tabelle mit "Y" für eine größere Temperaturdifferenz symbolisiert. Größere Temperaturdifferenzen zwischen der Außenluft und dem Vorgabewert für die Innenluft können beispielsweise im Sommer oder im Winter auftreten. Denkbar sind jedoch auch andere geeignete und sinnvolle Werte. Wie aus der Tabelle ersichtlich ist, führt eine höhere Temperaturdifferenz zwischen dem Vorgabewert für die Temperatur der Innenluft und der Temperatur der Außenluft jeweils dazu, dass das Luftbehandlungsgerät 4 nicht in dem Abluftbetrieb, sondern entweder in dem Umluftbetriebszustand oder in dem Luftreinigungsbetrieb betrieben wird. Dies deshalb, um bei extremen Temperaturunterschieden Energie zur Kühlung oder zur Heizung des Raums 18 einzusparen.

In der Tabelle steht das Symbol "+" für eine gute Luftqualität und das Symbol "-" für eine schlechte Luftqualität. Die relative Luftfeuchte ist in der Tabelle separat ausgewiesen, wobei das Symbol "+" für eine tolerierbare relative Luftfeuchte und das Symbol "-" für eine zu hohe Luftfeuchte steht. Die Betriebszustände des Kochfelds 10 sind in der Tabelle mit "1" für Kochfeld 10 eingeschaltet und mit "0" für Kochfeld 10 ausgeschaltet angegeben. Gleiches gilt für die Betriebszustände "Dampfgaren" und "Pyrolyse" des Backofens 12 und für den Betriebszustand "Auto-Open" des Geschirrspülers 14. Kein Feldeintrag bedeutet, dass der Wert für diese Größe für die Ansteuerung des Luftbehandlungsgeräts 4 unerheblich ist.

Ferner sind in der Tabelle exemplarisch mögliche Ansteuerungen des Luftbehandlungsgeräts 4 angegeben.

Beispielsweise wird mittels der Steuerung 16 des Luftbehandlungssystems 2 festgestellt, dass auf dem Kochfeld 10 aktuell ein Kochvorgang stattfindet. Wie aus der Tabelle ersichtlich ist, würde das Luftbehandlungsgerät 4 in diesem Fall entweder im Abluftbetriebszustand oder im Umluftbetriebszustand betrieben, um die Innenluft von nicht dargestellten Kochwrasen zu reinigen. Ist die Temperaturdifferenz zu groß, in der Tabelle mit "Y" gekennzeichnet, so wird das Luftbehandlungsgerät 4 im Umluftbetriebszustand betrieben. Anderenfalls, also wenn die Temperaturdifferenz nicht zu groß ist, in der Tabelle mit "X" gekennzeichnet, wird das Luftbehandlungsgerät 4 im Abluftbetriebszustand betrieben.

Die Betriebszustände des Luftbehandlungsgeräts 4 sind in der Tabelle wie folgt wiedergegeben: "A" für Abluftbetrieb, "U" für Umluftbetrieb, "L" für Luftreinigungsbetrieb und "0" für den Fall, dass das Luftbehandlungsgerät 4 nicht betrieben wird, also das Gebläse 24 des Luftbehandlungsgeräts 4 ausgeschaltet ist. "V" steht für die Ausgabe eines Lüftungsvorschlags mittels der Ausgabeeinheit 17 an den Benutzer.

Falls die Temperaturdifferenz zu groß ist und kein Kochvorgang auf dem Kochfeld 10 vorliegt, wird das Luftbehandlungsgerät 4 bei schlechter Luftqualität der Innenluft, in der Tabelle mit "-" gekennzeichnet, im Luftreinigungsbetrieb betrieben.

Falls die Temperaturdifferenz nicht zu groß ist und kein Kochvorgang auf dem Kochfeld 10 vorliegt, wird das Luftbehandlungsgerät 4 bei schlechter Luftqualität der Innenluft und der Außenluft, in der Tabelle mit "-" gekennzeichnet, ebenfalls im Luftreinigungsbetrieb betrieben.

Falls die Temperaturdifferenz nicht zu groß ist und kein Kochvorgang auf dem Kochfeld 10 vorliegt, wird das Luftbehandlungsgerät 4 bei schlechter Luftqualität der Innenluft und bei guter Luftqualität der Außenluft mittels der Ausgabeeinheit 17 ein Lüftungshinweis an den Benutzer ausgegeben.

Der Geschirrspüler 14 weist einen Betriebszustand auf, bei dem der Geschirrspüler 14 während eines Trocknungsvorgangs automatisch geöffnet wird. Entsprechend entweicht feuchte Luft aus dem Geschirrspüler 14 in den Raum 18. Sollte mittels der Innenluftsensoreinheit 6 eine erhöhte relative Luftfeuchte in dem Raum 18 detektiert werden, wird das Luftbehandlungsgerät 4 im Abluftbetriebszustand betrieben. Hierdurch wird die Feuchtigkeit effektiv aus dem Raum 18 entfernt, so dass einer ungewünschten Schimmelbildung wirksam vorgebeugt ist. Analoges gilt für den Fall, falls der Backofen 12 in dessen Dampfgarfunktion betrieben wird.

Sofern der Backofen 12 in dessen Pyrolysefunktion betrieben wird und die Temperaturdifferenz nicht zu groß ist, wird das Luftbehandlungsgerät 4 im Abluftbetriebszustand betrieben. Anderenfalls, falls die Temperaturdifferenz zu groß ist, wird das Luftbehandlungsgerät 4 im Luftreinigungsbetrieb betrieben. Hierdurch werden ungewünschte Geruchs- und Schadstoffe nach der Pyrolyse wirksam aus der Innenluft des Raums 18 entfernt.

Das Luftbehandlungsgerät 4 des Luftbehandlungssystems 2 umfasst neben den oben genannten und erläuterten Betriebszuständen zusätzlich einen Langzeitbetriebszustand, wobei das Luftbehandlungsgerät 4 in dem Langzeitbetriebszustand derart betrieben wird, dass das Luftbehandlungsgerät 4 während des Langzeitbetriebszustand von dem Benutzer und generell von sich in dem Raum 18 oder in dem Haus aufhaltenden Personen im Wesentlichen als nicht in Betrieb wahrnehmbar ist. Hierfür wird das Gebläse 24 des Luftbehandlungsgeräts 4 beispielsweise mit einer Drehzahl betrieben, welche geringer ist als die kleinste Drehzahl im Regelbetrieb. Vorzugsweise wird das Gebläse 24 mit einer sehr geringen Drehzahl, insbesondere kleiner 110 Umdrehungen pro Minute betrieben, so dass die Geräuschemission auf einen Schallpegel von kleiner 32 dB(A) minimiert wird. Zwecks zusätzlicher Geräuschreduzierung kann das Luftbehandlungsgerät 4 auf dem Fachmann bekannte Weise eine geeignete Schallisolierung aufweisen.

Bei dem Langzeitbetriebszustand handelt es sich um einen Betriebszustand, welcher auch in Abluftfunktion oder Umluftfunktion und/oder wie der Luftreinigungsbetrieb zeitlich getrennt von einem Kochprozess durchgeführt wird. Im Unterschied zu den Regelbetriebszuständen wird in dem Langzeitbetriebszustand das Gebläse 24 lediglich mit reduzierter Drehzahl, insbesondere kleiner 330 Umdrehungen pro Minute und/oder einer reduzierten Luftstrommenge kleiner 110 Kubikmeter pro Stunde betrieben.

Beispielsweise ist es denkbar, dass das Luftbehandlungsgerät 4 mittels der Steuerung 16 automatisch in dessen Langzeitbetriebszustand überführt wird, wenn das Kochfeld 10 länger als ein vorher festgelegter Zeitraum, bevorzugt länger als 10 min., eingeschaltet ist. Ein automatisches Einschalten des Langzeitbetriebszustands kann auch erfolgen, wenn der Backofen 12 oberhalb einer vorher festgelegten Temperatur, bevorzugt oberhalb von 150°C, oder mit einem vorher festgelegten Automatikprogramm betrieben wird. Eine automatische Überführung des Luftbehandlungsgeräts 4 in dessen Langzeitbetriebszustand ist auch denkbar, wenn die Innenluftsensoreinheit 6 oder eine andere mit der Innenluftsensoreinheit 6 vernetzte Sensoreinheit einen ungewünschten Geruch oder eine ungewünschte Luftqualität der Innenluft detektiert.

Sofern die detektierende Innenluftsensoreinheit 6 in einem Strömungsweg des Luftbehandlungsgeräts 4 angeordnet ist, kann es vorgesehen sein, dass das Gebläse 24 beispielsweise in vorher festgelegten Zeitabständen kurz eingeschaltet wird, um Innenluft aus dem Raum 18 an der Innenluftsensoreinheit 6 vorbeizuführen.

Der Langzeitbetriebszustand des Luftbehandlungsgeräts 4 wird in Abhängigkeit einer vorher festgelegten Zeitspanne und/oder einer manuellen und/oder automatischen Umschaltung des Luftbehandlungsgeräts 4 in einen anderen Betriebszustand des Luftbehandlungsgeräts 4 und/oder der Luftqualität der Innenluft und/oder der Luftqualität der Außenluft automatisch beendet. Beispielsweise erfolgt eine Beendigung des Langzeitbetriebszustands, wenn das Luftbehandlungsgerät 4 in dem Langzeitbetrieb für eine Zeitspanne von mehr als 24 h betrieben worden ist. Denkbar ist auch, dass der Langzeitbetriebszustand automatisch beendet wird, wenn an dem Luftbehandlungssystem 2 ein anderer Betriebszustand des Luftbehandlungsgeräts 4 manuell oder automatisch eingestellt worden ist. Ferner kann eine Beendigung des Langzeitbetriebszustands des Luftbehandlungsgeräts 4 dann erfolgen, wenn mittels der Innenluftsensoreinheit 6 oder einer anderen mit der Innenluftsensoreinheit 6 vernetzten Sensoreinheit der oben genannte ungewünschte Geruch nicht mehr detektierbar ist.

## Patentansprüche

1. Luftbehandlungssystem (2) zur Verbesserung einer Innenluft in einem Raum (18), umfassend
ein Luftbehandlungsgerät (4) zur Behandlung der Innenluft,
eine Innenluftsensoreinheit (6) zur Ermittlung der Luftqualität der Innenluft,
eine Außenluftsensoreinheit (8) zur Ermittlung der Luftqualität der Außenluft, mindestens ein in dem Raum (18) positioniertes Haushaltsgerät (10, 12, 14) und eine Steuerung (16) zur automatischen Ansteuerung des Luftbehandlungsgeräts (4) in Abhängigkeit der Luftqualität der Innenluft, der Luftqualität der Außenluft sowie eines Betriebszustands des Haushaltsgeräts (10, 12, 14),
wobei die Steuerung (16) mit der Innenluftsensoreinheit (6), mit der Außenluftsensoreinheit (8) und mit dem Haushaltsgerät (10, 12, 14) signalübertragend verbunden ist,
wobei die Steuerung (16) das Luftbehandlungsgerät (4) alternativ in wenigstens einem Regelbetriebszustand oder in einem Langzeitbetriebszustand betreibt,
**dadurch gekennzeichnet, dass**
die Steuerung (6) das Luftbehandlungsgerät (4) und/oder ein Gebläse (24) des Luftbehandlungsgeräts (4) während eines Regelbetriebszustandes mit einer Drehzahl von größer 500 Umdrehungen pro Minute und in dem Langzeitbetriebszustand mit einer Drehzahl von kleiner 350 Umdrehungen pro Minute betreibt.

2. Luftbehandlungssystem (2) nach Anspruch 1, wobei das Luftbehandlungsgerät (4) für einen Umluftbetriebszustand und/oder einen Abluftbetriebszustand und/oder einen Luftreinigungsbetrieb als Regelbetriebszustand ausgebildet und eingerichtet ist.

3. Luftbehandlungssystem (2) nach Anspruch 1 oder 2, wobei das Luftbehandlungsgerät (4) einen Fettfilter (22) und/oder einen Aktivkohlefilter (28) und/oder eine Plasmaeinheit (26) und/oder einen HEPA-Filter (30) aufweist.

4. Luftbehandlungssystem (2) nach einem der Ansprüche 1 bis 3, wobei das Luftbehandlungsgerät (4) als ein Dunstabzug für ein Kochfeld ausgebildet ist.

5. Luftbehandlungssystem (2) nach einem der Ansprüche 1 bis 4, wobei das Luftbehandlungssystem (2) eine mit der Steuerung (16) signalübertragend verbundene Ausgabeeinheit (17) zur Ausgabe von akustischen und/oder optischen Hinweisen an einen Benutzer des Luftbehandlungssystems (2) aufweist.

6. Luftbehandlungssystem (2) nach einem der Ansprüche 1 bis 5, wobei die Innenluftsensoreinheit (6) zur Erfassung einer Größe aus aus Feinstaub und/oder flüchtige organische Verbindungen und/oder Temperatur und/oder relative Luftfeuchte ausgebildet und eingerichtet ist
und/oder
die Außenluftsensoreinheit (8) zur Erfassung einer Größe aus aus Feinstaub und/oder flüchtige organische Verbindungen und/oder Temperatur und/oder relative Luftfeuchte ausgebildet und eingerichtet ist.

7. Verfahren zum Betrieb eines Luftbehandlungssystems (2) zur Verbesserung der Innenluft in einem Raum (18), wobei das Luftbehandlungssystem (2) nach einem der Ansprüche 1 bis 6 ausgebildet ist,
**dadurch gekennzeichnet, dass** das Luftbehandlungsgerät (4) von der Steuerung (16) automatisch gesteuert wird, in Abhängigkeit
der Luftqualität der Innenluft und/oder
der Luftqualität der Außenluft und/oder
des Betriebszustands des Haushaltsgeräts (10, 12, 14).

8. Verfahren nach Anspruch 7, wobei die Luftqualität der Innenluft und/oder die Luftqualität der Außenluft mindestens eine Größe aus Feinstaub, flüchtige organische Verbindungen, Temperatur und relative Luftfeuchte umfasst.

9. Verfahren nach Anspruch 8, **dadurch gekennzeichnet, dass** das Luftbehandlungsgerät (4) in Abhängigkeit einer Differenz
zwischen der Temperatur der Außenluft und der Temperatur der Innenluft;
und/oder
zwischen dem Feinstaubgehalt der Außenluft und dem Feinstaubgehalt der Innenluft;
und/oder
zwischen dem Gehalt an flüchtige organische Verbindungen der Außenluft und dem Gehalt an flüchtige organische Verbindungen der Innenluft;
und/oder
zwischen der relativen Luftfeuchte der Außenluft und der relativen Luftfeuchte der Innenluft;
automatisch in die Abluftfunktion oder die Umluftfunktion oder die Luftreinigungsfunktion umgeschaltet wird.

10. Verfahren nach Anspruch 9, **dadurch gekennzeichnet, dass** die Luftqualität der Innenluft, insbesondere die Temperatur und/oder Feinstaubgehalt und/oder flüchtige organische Verbindungen und/oder relative Luftfeuchte der Innenluft, als ein Vorgabewert werksseitig und/oder vom Benutzer festgelegt und in der Steuerung (16) abgespeichert wird.

11. Verfahren nach einem der Ansprüche 7 bis 10, **dadurch gekennzeichnet, dass** mittels der Ausgabeeinheit (17) in Abhängigkeit der Luftqualität der Innenluft, der Luftqualität der Außenluft sowie des Betriebszustands des Haushaltsgeräts (10, 12, 14) ein Lüftungshinweis ausgegeben wird.

12. Verfahren nach einem der Ansprüche 7 bis 11, **dadurch gekennzeichnet, dass** das Luftbehandlungsgerät (4) alternativ in wenigstens einem Regelbetriebszustand und einem Langzeitbetriebszustand betrieben werden kann,
wobei das Luftbehandlungsgerät (4) und/oder ein Gebläse (24) des Luftbehandlungsgeräts (4)
während eines Regelbetriebszustandes mit einer Drehzahl von größer 500 Umdrehungen pro Minute und in dem Langzeitbetriebszustand mit einer Drehzahl von kleiner 350 Umdrehungen pro Minute betrieben wird.

13. Verfahren nach Anspruch 12, wobei der Langzeitbetriebszustand des Luftbehandlungsgeräts (4) automatisch gestartet wird
in Abhängigkeit einer vorher festgelegten Zeitspanne eines Betriebs des Haushaltsgeräts (10, 12, 14)
und/oder einer vorher festgelegten Betriebstemperatur des Haushaltsgeräts (10, 12)
und/oder eines vorher festgelegten Automatikprogramms des
Haushaltsgeräts (10, 12, 14)
und/oder der Luftqualität der Innenluft.

14. Verfahren nach Anspruch 12 bis 13, wobei der Langzeitbetriebszustand des Luftbehandlungsgeräts (4) automatisch beendet wird in Abhängigkeit einer vorher festgelegten Zeitspanne
und/oder einer manuellen Umschaltung des Luftbehandlungsgeräts (4) in einen anderen Betriebszustand des Luftbehandlungsgeräts (4)
und/oder automatischen Umschaltung des Luftbehandlungsgeräts (4) in einen anderen Betriebszustand des Luftbehandlungsgeräts (4)
und/oder der Luftqualität der Innenluft.

## Claims

1. Air treatment system (2) for improving internal air in a room (18), comprising:
an air treatment appliance (4) for treating the internal air,
an internal air sensor unit (6) for determining the internal air quality,
an external air sensor unit (8) for determining the external air quality, at least one domestic appliance (10, 12, 14) positioned in the room (18), and a control means (16) for automatically controlling the air treatment appliance (4) depending on the internal air quality, the external air quality and an operating mode of the domestic appliance (10, 12, 14),
the control means (16) being connected to the internal air sensor unit (6), to the external air sensor unit (8) and to the domestic appliance (10, 12, 14) in a signal-transmitting manner,
the control means (16) operating the air treatment appliance (4) alternatively in at least one normal operating mode or in a long-term operating mode,
**characterised in that** the control means (6) operates the air treatment appliance (4) and/or a fan (24) of the air treatment appliance (4) at a rotational speed of greater than 500 revolutions per minute during a normal operating mode and at a rotational speed of less than 350 revolutions per minute in the long-term operating mode.

2. Air treatment system (2) according to claim 1, wherein the air treatment appliance (4) is designed and configured for a recirculation operating mode and/or an exhaust operating mode and/or an air purification operation as a normal operating mode.

3. Air treatment system (2) according to claim 1 or claim 2, wherein the air treatment appliance (4) comprises a grease filter (22) and/or an activated carbon filter (28) and/or a plasma unit (26) and/or a HEPA filter (30).

4. Air treatment system (2) according to any of claims 1 to 3, wherein the air treatment appliance (4) is designed as an extractor for a hob.

5. Air treatment system (2) according to any of claims 1 to 4, wherein the air treatment system (2) comprises an output unit (17) connected to the control means (16) in a signal-transmitting manner for outputting acoustic and/or optical information to a user of the air treatment system (2).

6. Air treatment system (2) according to any of claims 1 to 5, wherein the internal air sensor unit (6) is designed and configured to detect a variable of fine dust and/or volatile organic compounds and/or temperature and/or relative humidity,
and/or
the external air sensor unit (8) is designed and configured to detect a variable of fine dust and/or volatile organic compounds and/or temperature and/or relative humidity.

7. Method for operating an air treatment system (2) for improving the internal air in a room (18), the air treatment system (2) being designed according to any of claims 1 to 6,
**characterised in that** the air treatment appliance (4) is automatically controlled by the control means (16) depending on
the internal air quality and/or
the external air quality and/or
the operating mode of the domestic appliance (10, 12, 14).

8. Method according to claim 7, wherein the internal air quality and/or the external air quality includes at least one variable from fine dust, volatile organic compounds, temperature and relative humidity.

9. Method according to claim 8, **characterised in that** the air treatment appliance (4) is switched automatically to the exhaust function or the recirculation function or the air purification function depending on a difference
between the external air temperature and the internal air temperature; and/or
between the external air fine dust content and the internal air fine dust content;
and/or
between the content of volatile organic compounds in the external air and the content of volatile organic compounds in the internal air;
and/or
between the external air relative humidity and the internal air relative humidity.

10. Method according to claim 9, **characterised in that** the internal air quality, in particular the temperature and/or fine dust content and/or volatile organic compounds and/or internal air relative humidity, is set as a default value at the factory and/or by the user and stored in the control means (16).

11. Method according to any of claims 7 to 10, **characterised in that** ventilation information is issued by means of the output unit (17) depending on the internal air quality, the external air quality and the operating mode of the domestic appliance (10, 12, 14).

12. Method according to any of claims 7 to 11, **characterised in that** the air treatment appliance (4) can be operated alternatively in at least one normal operating mode and a long-term operating mode,
the air treatment appliance (4) and/or a fan (24) of the air treatment appliance (4) being operated
at a rotational speed of greater than 500 revolutions per minute during a normal operating mode and at a rotational speed of less than 350 revolutions per minute in the long-term operating mode.

13. Method according to claim 12, wherein the long-term operating mode of the air treatment appliance (4) is started automatically
depending on a preset period of operation of the domestic appliance (10, 12, 14)
and/or a preset operating temperature of the domestic appliance (10, 12)
and/or a preset automatic program of the domestic appliance (10, 12, 14)
and/or the internal air quality.

14. Method according to claims 12 to 13, wherein the long-term operating mode of the air treatment appliance (4) is automatically terminated depending on
a preset period
and/or manual switching of the air treatment appliance (4) to another operating mode of the air treatment appliance (4)
and/or automatic switching of the air treatment appliance (4) to another operating mode of the air treatment appliance (4)
and/or the internal air quality.

## Revendications

1. Système de traitement de l'air (2) permettant d'améliorer l'air intérieur dans une pièce (18), comprenant
un appareil de traitement de l'air (4) permettant de traiter l'air intérieur,
une unité formant capteur d'air intérieur (6) permettant de déterminer la qualité de l'air intérieur,
une unité formant capteur d'air extérieur (8) pour déterminer la qualité de l'air extérieur, au moins un appareil électroménager (10, 12, 14) positionné dans la pièce (18) et un dispositif de commande (16) permettant de commander automatiquement l'appareil de traitement de l'air (4) en fonction de la qualité de l'air intérieur, de la qualité de l'air extérieur ainsi que d'un état de fonctionnement de l'appareil électroménager (10, 12, 14),
dans lequel le dispositif de commande (16) est connecté par transmission de signaux à l'unité formant capteur d'air intérieur (6), à l'unité formant capteur d'air extérieur (8) et à l'appareil électroménager (10, 12, 14),
dans lequel le dispositif de commande (16) fait fonctionner l'appareil de traitement de l'air (4) alternativement dans au moins un état de fonctionnement de régulation ou dans un état de fonctionnement longue durée,
**caractérisé en ce que** le dispositif de commande (6) fait fonctionner l'appareil de traitement de l'air (4) et/ou une soufflante (24) de l'appareil de traitement de l'air (4) à une vitesse de rotation supérieure à 500 tours par minute pendant un état de fonctionnement de régulation et à une vitesse de rotation inférieure à 350 tours par minute dans l'état de fonctionnement longue durée.

2. Système de traitement de l'air (2) selon la revendication 1, dans lequel l'appareil de traitement de l'air (4) est réalisé et configuré pour un état de fonctionnement à circulation d'air et/ou un état de fonctionnement à évacuation d'air et/ou un état de fonctionnement à purification d'air comme état de fonctionnement de régulation.

3. Système de traitement de l'air (2) selon la revendication 1 ou 2, dans lequel l'appareil de traitement de l'air (4) présente un filtre antigraisse (22) et/ou un filtre à charbon actif (28) et/ou une unité à plasma (26) et/ou un filtre HEPA (30).

4. Système de traitement de l'air (2) selon l'une des revendications 1 à 3, dans lequel l'appareil de traitement de l'air (4) est réalisé sous forme de hotte aspirante pour une plaque de cuisson.

5. Système de traitement de l'air (2) selon l'une des revendications 1 à 4, dans lequel le système de traitement de l'air (2) présente une unité de sortie (17) connectée au dispositif de commande (16) par transmission de signaux permettant de délivrer en sortie des indications acoustiques et/ou optiques à un utilisateur du système de traitement de l'air (2).

6. Système de traitement de l'air (2) selon l'une des revendications 1 à 5, dans lequel l'unité formant capteur d'air intérieur (6) est réalisée et configurée pour détecter une grandeur parmi des poussières fines et/ou des composés organiques volatils et/ou une température et/ou une humidité relative de l'air
et/ou
l'unité formant capteur d'air extérieur (8) est réalisée et configurée pour détecter une grandeur parmi des poussières fines et/ou des composés organiques volatils et/ou une température et/ou une humidité relative de l'air.

7. Procédé permettant de faire fonctionner un système de traitement de l'air (2) permettant d'améliorer l'air intérieur d'une pièce (18), dans lequel le système de traitement de l'air (2) est réalisé selon l'une des revendications 1 à 6,
**caractérisé en ce que** l'appareil de traitement de l'air (4) est commandé automatiquement par le dispositif de commande (16) en fonction
de la qualité de l'air intérieur et/ou
de la qualité de l'air extérieur et/ou
de l'état de fonctionnement de l'appareil électroménager (10, 12, 14).

8. Procédé selon la revendication 7, dans lequel la qualité de l'air intérieur et/ou la qualité de l'air extérieur comprennent au moins une grandeur parmi les poussières fines, les composés organiques volatils, la température et l'humidité relative de l'air.

9. Procédé selon la revendication 8, **caractérisé en ce que** l'appareil de traitement de l'air (4) est commuté, en fonction d'une différence
entre la température de l'air extérieur et la température de l'air intérieur ;
et/ou
entre la teneur en poussières fines de l'air extérieur et la teneur en poussières fines de l'air intérieur ;
et/ou
entre la teneur en composés organiques volatils de l'air extérieur et la teneur en composés organiques volatils de l'air intérieur ;
et/ou
entre l'humidité relative de l'air extérieur et l'humidité relative de l'air intérieur ;
automatiquement en fonction évacuation d'air ou fonction circulation d'air ou en fonction purification d'air.

10. Procédé selon la revendication 9, **caractérisé en ce que** la qualité de l'air intérieur, en particulier la température et/ou la teneur en poussières fines et/ou les composés organiques volatils et/ou l'humidité relative de l'air intérieur, est définie en tant que valeur prédéterminée en usine et/ou par l'utilisateur et est mémorisée dans le dispositif de commande (16).

11. Procédé selon l'une des revendications 7 à 10, **caractérisé en ce qu'une** indication de ventilation est délivrée en sortie au moyen de l'unité de sortie (17) en fonction de la qualité de l'air intérieur, de la qualité de l'air extérieur ainsi que de l'état de fonctionnement de l'appareil électroménager (10, 12, 14).

12. Procédé selon l'une des revendications 7 à 11, **caractérisé en ce que** l'appareil de traitement de l'air (4) peut fonctionner alternativement dans au moins un état de fonctionnement de régulation et un état de fonctionnement longue durée,
dans lequel l'appareil de traitement de l'air (4) et/ou une soufflante (24) de l'appareil de traitement de l'air (4)
fonctionnent à une vitesse de rotation supérieure à 500 tours par minute pendant un état de fonctionnement de régulation et à une vitesse de rotation inférieure à 350 tours par minute dans l'état de fonctionnement longue durée.

13. Procédé selon la revendication 12, dans lequel l'état de fonctionnement longue durée de l'appareil de traitement de l'air (4) est démarré automatiquement
en fonction d'une période de fonctionnement prédéfinie de l'appareil électroménager (10, 12, 14)
et/ou d'une température de fonctionnement prédéfinie de l'appareil électroménager (10, 12)
et/ou d'un programme automatique prédéfini de l'appareil électroménager (10, 12, 14)
et/ou de la qualité de l'air intérieur.

14. Procédé selon les revendications 12 à 13, dans lequel l'état de fonctionnement longue durée de l'appareil de traitement de l'air (4) est automatiquement arrêté en fonction
d'une période prédéfinie
et/ou d'une commutation manuelle de l'appareil de traitement de l'air (4) dans un autre état de fonctionnement de l'appareil de traitement de l'air (4)
et/ou d'une commutation automatique de l'appareil de traitement de l'air (4) dans un autre état de fonctionnement de l'appareil de traitement de l'air (4)
et/ou de la qualité de l'air intérieur.
